# EUROPÄISCHE PATENTSCHRIFT

(11) **EP 1 819 568 B1**
(45) Veröffentlichungstag und Bekanntmachung des Hinweises auf die Patenterteilung: **02.03.2011**
(21) Anmeldenummer: 05793851.6
(22) Anmeldetag: 08.10.2005
(51) Int. Cl.: B60T 17/02

(54) **VERFAHREN ZUM REGELN EINES DRUCKLUFTVERSORGUNGSSYSTEMS EINES KRAFTFAHRZEUGS**
METHOD FOR CONTROL OF A PRESSURISED AIR SUPPLY SYSTEM FOR A MOTOR VEHICLE
PROCEDE POUR REGULER UN SYSTEME D'ALIMENTATION EN AIR COMPRIME D'UN VEHICULE AUTOMOBILE

(30) Priorität: 10.12.2004 DE 102004059834
(43) Veröffentlichungstag der Anmeldung: 22.08.2007
(73) Patentinhaber: Voith Turbo GmbH & Co. KG, 89522 Heidenheim (DE)
(72) Erfinder: KLEY, Markus, 73479 Ellwangen (DE); HÖLLER, Heinz, 74564 Crailsheim (DE); VOGELSANG, Klaus, 74564 Crailsheim (DE); PITTIUS, Reinhold, 74564 Crailsheim (DE); ADLEFF, Kurt, 74564 Crailsheim (DE); ADAMS, Werner, 74564 Crailsheim (DE)
(74) Vertreter: Dr. Weitzel & Partner
(86) Internationale Anmeldenummer: PCT/EP2005/010861
(87) Internationale Veröffentlichungsnummer: WO 2006/061056

(56) Entgegenhaltungen:
- US-A- 1 709 871
- US-A- 4 459 085
- US-A- 6 036 449

## Beschreibung

Die Erfindung betrifft ein Verfahren zum Regeln eines Druckluftversorgungssystems eines Kraftfahrzeugs, wobei das System einen Antriebsmotor umfasst, der der Kraftfahrzeugsantriebsmotor ist, d. h. zur Fortbewegung des Kraftfahrzeugs dient, ferner einen Luftverdichter, welcher ein Druckluftsystem des Fahrzeugs speist, und insbesondere eine hydrodynamische Kupplung, die in die Triebverbindung zwischen dem Antriebsmotor und dem Luftverdichter geschaltet ist. Die hydrodynamische Kupplung ist dabei befüll- und entleerbar, um somit den Luftverdichter ein- und auszuschalten, in Abhängigkeit des Druckzustands in dem Druckluftsystem. Der Luftverdichter ist insbesondere als Hubkolben-Luftverdichter ausgebildet.

Druckluftversorgungssysteme, wie sie die Erfindung betrifft, weisen den Vorteil auf, dass durch die zwischengeschaltete hydrodynamische Kupplung einerseits ein energetisch günstiges Ausschalten des Luftverdichters möglich ist, wenn eine Speisung des Fahrzeugdruckluftsystems aufgrund eines ausreichenden Druckniveaus in diesem nicht notwendig ist, indem die hydrodynamische Kupplung "einfach" entleert wird. Andererseits wird durch die Zwischenschaltung der hydrodynamischen Kupplung zwischen den Antriebsmotor und den Luftverdichter wirkungsvoll eine Schwingungsdämpfung erreicht und zuverlässig vermieden, dass bei Verwendung eines Hubkolben-Luftverdichters ein negatives Drehmoment, d. h. ein Drehmoment, das vom Verdichter erzeugt wird, welches im Bereich des oberen Totpunktes des Hubkolben-Luftverdichters auftreten kann, von dem Hubkolben-Luftverdichter auf den Antriebsmotor bzw. ein an diesem angeschlossenes Getriebe zurückübertragen wird.

In einem solchen Druckluftversorgungssystem gibt es eine Vielzahl von Zuständen mit unterschiedlichen Randbedingungen, in welchen die verschiedenen Komponenten des Druckluftversorgungssystems derart geeignet zusammenarbeiten müssen, dass ein energetisch günstiger und bauteilschonender Betrieb gewährleistet ist. Als unterschiedliche Randbedingungen seien beispielsweise das Fahren des Fahrzeugs gegenüber dem Stillstand des Fahrzeugs, das Streckenprofil, welches das Fahrzeug gerade zurücklegt, wie Bergauffahrten oder Bergabfahrten, sowie unterschiedliche Druckzustände im Druckluftversorgungssystem des Fahrzeugs genannt, beispielsweise oberhalb eines maximal zulässigen Druckes, unterhalb des minimal zulässigen Druckes sowie unterhalb eines sogenannten Lösedruckes, bei dem der Federspeicher im Fahrzeugbremssystem gelöst wird und unterhalb dessen das Fahrzeug nicht fahren darf, genannt. Dieser Lösedruck ergibt sich durch die Ausführung der Bremsen als "fail-safe", das heißt bei einem Ausfall der Druckluftanlage werden die Bremsbacken beispielsweise mittels Federn angedrückt, so dass eine Bremsung erfolgt. Ab einem bestimmten Luftdruck können die Bremsbacken dann aktiv gelöst werden, so dass unterhalb dieses Druckes das Fahrzeug nicht losfahren kann.

Bei allen bekannten Verfahren zum Regeln eines Druckluftversorgungssystems eines Kraftfahrzeugs, bei welchen der Luftverdichter mittels des Antriebsmotors angetrieben wird, ist es üblich, für jeglichen Fahrtzustand des Kraftfahrzeugs einen fest vorgegebenen Minimaldruckwert und einen fest vorgegebenen Maximaldruckwert für den Druck im Druckluftsystem einzustellen. Dabei soll sich der Druck im Druckluftsystem stets zwischen diesen beiden Werten bewegen, das heißt, wenn der Druck im Druckluftsystem auf den Minimalwert abgefallen ist, wird der Luftverdichter gestartet, so dass das Druckluftsystem gespeist wird, und wenn der Druck im Druckluftsystem durch diese fortgeführte Speisung den vorgegebenen Maximaldruck erreicht hat, wird die Speisung beendet. Aufgrund dieser starren Vorgabe der beiden Grenzwerte kann es vorkommen, dass das Fahrzeug gerade einen steilen Anstieg hinauffährt, was trotz der vollen Leistungsabgabe des Antriebsmotors zu nur einer äußerst geringen Fahrzeuggeschwindigkeit führt, und gleichzeitig der Druck im Druckluftsystem aufgrund angeschlossener Luftverbraucher den vorgegebenen Minimalwert unterschreitet und somit der Luftverdichter gestartet wird. Dadurch, dass der Luftverdichter ebenfalls von dem Antriebsmotor des Fahrzeugs angetrieben wird, steht die hierfür erforderliche Leistungsaufnahme des Luftverdichters nicht mehr zum Antrieb des Fahrzeugs zur Verfügung, das Fahrzeug verliert weiter an Geschwindigkeit.

Auf der anderen Seite wurde bisher aufgrund der starr vorgegebenen Grenzwerte für das Einschalten und Ausschalten des Luftverdichters die Leistungsaufnahme des Luftverdichters nicht gezielt energetisch genutzt.

Zum Stand der Technik wird auf die folgenden Dokumente verwiesen, wobei die aus dem erstgenannten Dokument bekannten Merkmale im Oberbegriff von Anspruch 1 zusammengefasst sind:
US 6 036 449 A
US 1 709 871 A
US 4 459 085 A

Der Erfindung liegt die Aufgabe zugrunde, ein Verfahren zum Regeln eines eingangs beschriebenen Druckluftversorgungssystems darzustellen, welches zu einer energetisch günstigen Fahrweise des Fahrzeugs beiträgt.

Die erfindungsgemäße Aufgabe wird durch ein Verfahren mit den Merkmalen von Anspruch 1 gelöst. Die Unteransprüche beschreiben vorteilhafte und besonders zweckmäßige Weiterbildungen des erfindungsgemäßen Verfahrens.

Der Begriff Druckluftversorgungssystem im Zusammenhang mit der vorliegenden Erfindung beschreibt das im Kraftfahrzeug angeordnete System, mittels welchem Druckluft in das Fahrzeugdruckluftsystem bei Bedarf gepumpt wird. Dieses Pumpen erfolgt mittels eines Luftverdichters, welcher beispielsweise als Hubkolben-Luftverdichter ausgebildet ist, und der vom Antriebsmotor des Kraftfahrzeugs angetrieben wird.

Beispielsweise sind zwei unterschiedliche Schaltanordnungen möglich. Gemäß einer ersten Schaltanordnung wird der Luftverdichter ständig vom Antriebsmotor des Kraftfahrzeugs angetrieben, und die Luftabgabeseite des Luftverdichters wird bei Bedarf mit dem Druckluftsystem des Fahrzeugs verbunden, nämlich dann, wenn aufgrund einer festgestellten Druckunterschreitung im Druckluftsystem eine Einspeisung als notwendig bewertet wird. Der Zustand, in welchem der Luftverdichter in das Druckluftsystem einspeist, wird im Rahmen der vorliegenden Erfindung als Speisungszustand bezeichnet.

Wenn aufgrund der erfassten Druckverhältnisse im Druckluftsystem festgestellt wird, dass die Einspeisung beendet werden soll, wird in den Nichtspeisungszustand umgeschaltet, das heißt eine weitere Einspeisung von Druckluft in das Druckluftsystem mittels des Luftverdichters wird unterbunden. Gemäß der ersten Schaltanordnung geschieht diese Unterbindung dadurch, dass die Verbindung zwischen der Luftabgabeseite des Luftverdichters und dem Druckluftsystem unterbrochen wird, so dass der Luftverdichter beispielsweise in die Umgebung speist.

Gemäß einer zweiten Schaltanordnung, welche im Rahmen der vorliegenden Erfindung zum Einsatz kommen kann, wird der Luftverdichter immer nur dann angetrieben, wenn eine Einspeisung in das Druckluftsystem erfolgen soll. Gemäß dieser Schaltanordnung kann die Luftabgabeseite, muss jedoch nicht, ständig mit dem Druckluftsystem des Fahrzeugs verbunden sein. Ein Ein- und Ausschalten des Luftverdichters erfolgt vorteilhaft mittels einer hydrodynamischen Kupplung, welche in einer Triebverbindung zwischen dem Antriebsmotor und dem Luftverdichter angeordnet ist. Bei Befüllung der hydrodynamischen Kupplung wird Drehmoment beziehungsweise Drehleistung vom Antriebsmotor auf den Luftverdichter übertragen, während bei vollständig entleerter oder bis auf eine vorgegebene Restarbeitsmediummenge entleerter hydrodynamische Kupplung keine Antriebsleistung auf den Luftverdichter übertragen wird.

Erfindungsgemäß erfolgt die Einstellung des Speisungszustandes oder des Nichtspeisungszustandes, wobei sich die beiden Zustände naturgemäß gegenseitig ausschließen, in Abhängigkeit wenigstens eines Schaltdruckwertes. Insbesondere werden zwei Schaltdruckwerte vorgegeben, nämlich ein erster Schaltdruckwert, der auch als unterer Schaltdruckwert bezeichnet werden könnte, bei welchem eine Umschaltung in den Speisungszustand erfolgt, und ein zweiter Schaltdruckwert, welcher auch als oberer Schaltdruckwert bezeichnet werden könnte, bei dem eine Umschaltung in den Nichtspeisungszustand erfolgt.

Der Druck im Druckluftsystem wird mit dem wenigstens einen Schaltdruckwert oder vorteilhaft mit allen Schaltdruckwerten verglichen, und in Abhängigkeit dieses Vergleichs erfolgt die Einstellung des Speisungszustandes oder die Einstellung des Nichtspeisungszustandes. Wenn beispielsweise bei einer Vorgabe von zwei Schaltdruckwerten der Druck im Druckluftsystem den ersten unteren Schaltdruckwert erreicht oder unterschreitet, wird in den Speisungszustand geschaltet, und wenn der Druck im Druckluftsystem den zweiten oberen Schaltdruckwert erreicht oder überschreitet, wird in den Nichtspeisungszustand geschaltet.

Erfindungsgemäß wird die Topographie der Fahrtstrecke, das heißt das Höhenprofil des vom Fahrzeug zurückgelegten beziehungsweise zurückzulegenden Weges, erfasst. Diese Topographieerfassung kann entweder dadurch erfolgen, dass die Topographie in einem Speichermedium zur Verfügung gestellt wird, welches ausgelesen wird, oder sie kann beispielsweise durch Verwendung eines Navigationssystems, wie es dem Fachmann hinlänglich bekannt ist und zum Navigieren des Fahrers zu einem ausgewählten Ziel dient, erfolgen.

Die erfasste Topographie der Fahrtstrecke, auf welcher sich das Kraftfahrzeug bewegt, umfasst das Streckenprofil, welches das Kraftfahrzeug innerhalb einer vorgegebenen unmittelbar bevorstehenden Zeitspanne und/oder innerhalb einer vorgegebenen unmittelbar bevorstehenden Wegstrecke bei einem vorgegebenen Fahrtziel zurücklegen muss. Das heißt, es wird bestimmt, welche Strecke das Kraftfahrzug angesichts seiner momentanen, tatsächlichen Position auf der erfassten Topographie nun bei einer Weiterfahrt zurücklegen wird. Wenn beispielsweise erfasst wird, dass sich das Fahrzeug momentan auf dem halben Weg eines kontinuierlichen Anstiegs befindet, so umfasst das in der genannten Topographie beinhaltete Streckenprofil beispielsweise die zweite Hälfte dieser Steigung.

Der erfindungsgemäße Schaltdruckwert beziehungsweise die Schaltdruckwerte, in Abhängigkeit dessen/deren der Speisungszustand oder der Nichtspeisungszustand eingestellt wird, wird in Abhängigkeit der erfassten Topographie und insbesondere in Abhängigkeit des genannten in der Topographie beinhalteten Streckenprofils, welches das Kraftfahrzeug im Anschluss an seine aktuelle Position zurücklegen wird, bestimmt.

Die Erfindung soll nachfolgend anhand der Figuren und der zugehörigen Figurenbeschreibung im Rahmen eines Ausführungsbeispiels beschrieben werden.

Es zeigen:
- Figur 1: eine schematische Darstellung eines erfindungsgemäß geregelten Druckluftversorgungssystems;
- Figur 2: eine Prinzipskizze, welche die Bewegung eines Kraftfahrzeugs auf einer Fahrtstrecke und die hierzu erfasste Topographie darstellt;
- Figur 3: ein Ausführungsbeispiel für die Bestimmung von zwei Schaltdruckwerten in Abhängigkeit der erfassten Topographie beziehungsweise des Streckenprofils.

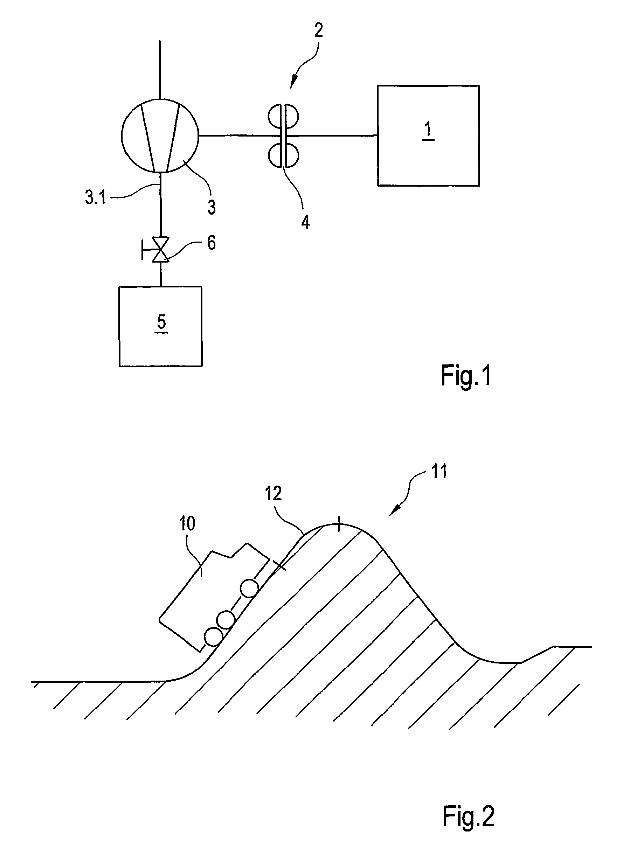

In der Figur 1 erkennt man den Antriebsmotor 1 eines Kraftfahrzeugs, welcher durch Befüllen einer hydrodynamischen Kupplung 4 mit Arbeitsmedium, insbesondere mit Öl des Motorölkreislaufs, in eine Triebverbindung 2 mit einem Luftverdichter 3 schaltbar ist. Der Luftverdichter 3 speist, wenn er vom Antriebsmotor 1 angetrieben wird, das heißt, wenn das erfindungsgemäße Verfahren in den Speisungszustand schaltet, über seine Luftabgabeseite 3.1 in das Druckluftsystem 5 des Kraftfahrzeugs.

In die druckluftführende Leitung auf der Luftabgabeseite 3.1, das heißt in die Leitung, welche den Luftverdichter 3 mit dem Druckluftsystem 5 luftleitend verbindet, ist eine schaltbare und/oder regelbare Drossel 6 eingebracht. Diese Drossel dient dazu, um gemäß einer vorteilhaften Ausführung des erfindungsgemäßen Verfahrens den Gegendruck, gegen welchen der Luftverdichter 3 fördert, durch Androsselung des geförderten Luftstromes gezielt zu erhöhen, wenn im Bremsbetrieb des Kraftfahrzeugs möglichst viel Antriebsleistung vom Antriebsmotor 1 auf den Luftverdichter 3 übertragen werden soll. Alternativ könnte anstelle der Drossel 6 auch ein Absperrventil (nicht dargestellt) angeordnet sein, welches die Luftströmung von dem Luftverdichter 3 in das Druckluftsystem 5 unterbricht und zu einem fortdauernden Druckanstieg des Gegendrucks, gegen welchen der Druckverdichter 3 fördert, führt, bis ein maximal zulässiger Druck des Luftverdichters 3 erreicht wird, bei dem beispielsweise ein Überdruckventil (nicht dargestellt) öffnet und Druckluft entsprechend abgelassen wird. Bei einer vollständigen Absperrung der Förderseite des Luftverdichters 3 wird sich naturgemäß in Abhängigkeit der Speicherkapazität der Abströmseite des Luftverdichters 3 einer rascher Druckanstieg einstellen, da dieser Vorgang vergleichbar mit dem Befüllen eines Druckbehälters ist. Dementsprechend wird die Androsselung des geförderten Luftstromes einer vollständigen Absperrung vorgezogen, da somit trotz eines Durchsatzes vom Luft durch das Drosselventil eine Erhöhung des Gegendrucks des Luftverdichters 3 gegenüber dem Druck im Druckluftsystem 5 erzielt wird.

Diese gezielte Druckerhöhung des Gegendruckes, gegen welchen der Luftverdichter 3 fördert, wird genau dann eingestellt, wenn sich das Kraftfahrzeug eine Bergstrecke beziehungsweise ein Gefälle hinab bewegt. Hierdurch wird erreicht, dass die Leistungsaufnahme des Luftverdichters 3 gesteigert wird, so dass er entsprechend Antriebsleistung vom Antriebsmotor abzieht, was zu einer Bremsung des Antriebsmotors führt und somit die Stellbremsen des Fahrzeugs entlastet. Das sich der Antriebsmotor bei einer Abwärtsfahrt des Kraftfahrzeugs im Schubbetrieb befindet, kann erreicht werden, dass er durch die zusätzliche Leistungsaufnahme des Luftverdichters gegen ein höheres Moment schiebt und somit in seiner Drehzahl gedrückt wird.

In der Figur 2 ist ein Fahrzeug 10 dargestellt, welches gerade eine Steigung hinauf fährt. Das Höhenprofil der gesamten dargestellten Fahrtstrecke ist in der erfassten Topographie 11 enthalten. Wie man sieht, ist gesondert das Streckenprofil 12 in der Topographie 11 beinhaltet, welches das Kraftfahrzeug 10 aufgrund seiner aktuellen Position bei seiner Weiterfahrt im unmittelbaren Anschluss zurücklegen wird. Anhand dieses Streckenprofils 12 kann eine Bewertung erfolgen, dass eine dauerhafte Bremsung in einer begrenzten bevorstehenden Zeitspanne bzw. in einer begrenzten bevorstehenden zu befahrenden Strecke nicht zu erwarten ist. Erst bei Erreichen des Endes des eingezeichneten Streckenprofils 12 folgt eine Gefällstrecke, welches das Kraftfahrzeug 10 hinunterfahren wird, so dass dann eine dauerhafte Bremsung zu erwarten ist und entsprechend dafür gesorgt werden sollte, dass genug Druckluft im Druckluftsystem 5 für diese Bremsung vorhanden ist.

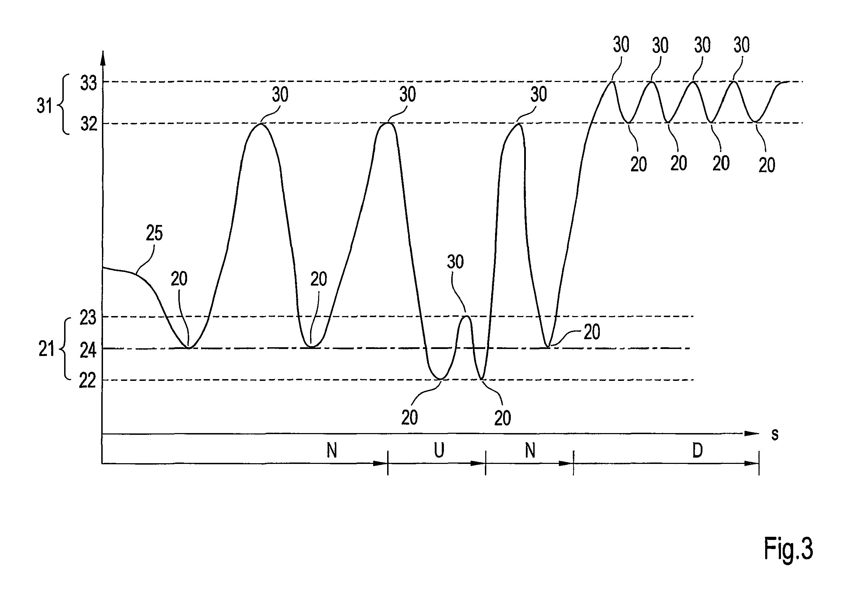

In der Figur 3 ist ein schematisches Diagramm dargestellt, auf dessen Abszisse der streckenmäßige Verlauf der Fahrt des Kraftfahrzeugs dargestellt ist, und auf dessen Ordinate der Druck 25 im Druckluftsystem 5, die dynamisch und variierend gesetzten Schaltdruckwerte 20, 30, verschiedene Druckgrenzwerte 22 bis 24 und 32 bis 33 sowie Grenzwertbereiche 21, 31 für die Schaltdruckwerte 20, 30 dargestellt sind. Die Abszisse ist dabei mit "s" als Abkürzung für die verstreichende Strecke und die Ordinate mit "p" für den Druck bezeichnet. Ferner sind unterhalb der Abszisse die Buchstaben "N" für Normalfahrt, das heißt eine Wegstrecke ohne dauerhafte Steigungen oder Gefälle, "U" für Aufwärtsfahrt (Up), das heißt für einen kontinuierlichen Anstieg mit einer vorgegebenen Mindestlänge, und "D" für eine Abwärtsfahrt (Down), das heißt für einen kontinuierliche Abstieg mit einer vorgegebenen Mindestlänge, dargestellt.

Beginnend links auf der Abszisse bewegt sich das Fahrzeug zunächst auf einer Normalstrecke, das heißt auf einer Strecke ohne anhaltende Anstiege oder Abstiege. Beispielsweise können solche anhaltenden Anstiege beziehungsweise Abstiege, welche zu einer Klassierung des zugehörigen Streckenprofils außerhalb einer Normalfahrt ("U" oder "D") führen, durch Heranziehen eines Grenzwertes für einen Steigungswert und eines Grenzwertes für eine Streckenlänge, innerhalb welcher der Steigungswert nicht unterschritten wird, wobei der Steigungswert beispielsweise sowohl für einen Anstieg als auch einen Abstieg die Steigung in einem positiven Prozentwert angibt und 100% Steigung 45 Grad Steigungswinkel entsprechen, festgestellt werden. Mit entsprechenden Grenzwerten kann demnach jedes Streckenprofil in eine Normalstrecke (N), eine Bergabstrecke beziehungsweise einen Abstieg (D) und eine Bergaufstrecke beziehungsweise einen Aufstieg (U) klassiert werden.

In dem in der Figur 3 dargestellten Diagramm bewegt sich das Fahrzeug nun wie ausgeführt zunächst auf einer Normalstrecke, so dass ein erster Schaltdruckwert 20 auf einen "üblichen" Mindestdruck im Druckluftsystem 5 gesetzt wird. Dieser übliche Mindestdruck liegt in einem vorgegebenen ersten Druckbereich 21 mit einem unteren Grenzwert 22 und einem oberen Grenzwert 23, und zwar genau auf dem arithmetischen Mittelwert 24 zwischen dem unteren Grenzwert 22 und dem oberen Grenzwert 23. Wenn der Druck 25 im Druckluftsystem 5 nun aufgrund der Versorgung von einem oder mehreren Luftverbrauchern abfällt und den ersten Schaltdruckwert 20 erreicht, wird in den Speisungszustand geschaltet, so dass der Luftverdichter 3 Druckluft in das Druckluftsystem 5 hineinpumpt. Entsprechend steigt der Druck 25 im Druckluftsystem 5 an, wie man anhand der Kurve im linken Bereich der Figur 3, hinter dem Punkt, an welchem zum ersten Mal der Schaltdruckwert 20 erreicht worden ist, erkennen kann.

Es wird ein zweiter Schaltdruckwert 30 vorgegeben, welcher für die momentan zurückgelegte Normalstrecke einem oberen Grenzwert für den Druck 25 im Druckluftsystem 5 entspricht. Dieser obere Grenzwert kann innerhalb eines vorgegebenen zweiten Druckbereichs 31 festgelegt werden, wobei dieser zweite Druckbereich 31 naturgemäß einen wesentlichen, vorbestimmten Abstand zu dem ersten Druckbereich 21 hat. Vorliegend stellt der Druck 32 einen "normalen" oberen Grenzdruck für das Druckluftsystem 5 dar, wobei in besonderen Fahrtsituationen, welche später noch beschrieben werden, für bestimmte Zeiträume ein überhöhter Druck 33, nämlich der obere Grenzwert 33 des zweiten Druckbereichs 31 im Druckluftsystem 5 zugelassen wird.

Wenn der Druck 25 im Druckluftsystem 5 den zweiten Schaltdruckwert 30 erreicht, wird vom Speisungszustand in den Nichtspeisungszustand geschaltet, so dass aufgrund des Luftverbrauchs des oder der Verbraucher der Druck 25 im Druckluftsystem 5 im Anschluss an die Umschaltung wieder abfällt, bis er wieder den ersten Schaltdruckwert 20 erreicht, wodurch es wieder zu einem Schalten in den Speisungszustand kommt, usw.

Wenn sich das Fahrzeug nun eine Steigung hinauf bewegt, und aufgrund einer durchgeführten automatischen Bewertung des Streckenprofils 12 feststeht, dass zumindest, solange wie sich das Fahrzeug auf diesem Streckenprofil 12 bewegt, keine dauerhafte Bremsung zu erwarten ist, welche einen entsprechenden Druckluftvorrat im Druckluftsystem 5 notwendig macht, wird zugelassen, dass der Druck 25 im Druckluftsystem 5 auf einen verminderten Mindestdruck abfällt. Dadurch wird ein Einschalten des Luftverdichters 3 verzögert und somit zumindest für eine bestimmte Zeitspanne vermieden, dass der Antriebsmotor 1, welcher ohnehin durch das Bewegen des Kraftfahrzeugs 10 den Berg hinauf stark belastet ist, zusätzlich durch den Antrieb des Luftverdichters 3 belastet wird, was zu einem Abfallen der Geschwindigkeit des Fahrzeugs 10 führen würde. Dementsprechend wird der erste Schaltdruckwert 20 auf den unteren Grenzwert 22 des vorgegebenen ersten Druckbereiches 21 gesetzt, wie man anhand der Kurve in der Figur 3 in dem Bereich "U" sieht.

Erst wenn der Druck 25 im Druckluftsystem 5 den Schaltdruckwert 20, der nunmehr verhältnismäßig tief gesetzt ist, erreicht, wird der Luftverdichter 3 gestartet, so dass der Druck 25 im Druckluftsystem 5 wieder ansteigt.

Da das Fahrzeug weiterhin den Anstieg hinauf fährt, und aufgrund der Auswertung des Streckenprofils 12 feststeht, dass keine dauerhafte Bremsung zu erwarten ist, wird die Belastung des Antriebsmotors 1 des Fahrzeugs 10 mit dem Antrieb des Luftverdichters 3 möglichst verkürzt, indem der zweite Schaltdruckwert 30 auf den oberen Grenzwert 23 des ersten Druckbereichs 21 gesetzt wird. Wie man in der Figur 3 erkennen kann, wird somit der Luftverdichter 3 über nur eine vergleichsweise kurze Zeitspanne angetrieben, und nach Erreichen des zweiten Schaltdruckwertes 30 durch den Druck 25 im Druckluftsystem 5 erfolgt eine Abschaltung des Luftverdichters 3, das heißt, es wird in den Nichtspeisungszustand geschaltet, wodurch der Druck 25 im Druckluftsystem 5 wieder allmählich bis auf den ersten Schaltdruckwert 20 absinkt.

Im Anschluss auf diese Abwärtsstrecke bewegt sich das Fahrzeug 10 wieder auf einer Normalstrecke, so dass der erste Schaltdruckwert 20 wieder auf den Wert 24 und der zweite Schaltdruckwert 30 wieder auf den Wert 32 gesetzt wird.

Schließlich bewegt sich das Fahrzeug 10 eine Gefällestrecke hinab (Abschnitt "D"), und die Einstellung der beiden Schaltdruckwerte 20 und 30 erfolgt derart, dass eine erhöhte verschleißfreie Bremswirkung durch einen leistungsintensiven Antrieb des Luftverdichters 3 auf den Antriebsmotor 1 ausgeübt wird. Wie man in der Figur 3 erkennen kann, wird nämlich, wenn sich das Fahrzeug eine Steigung hinab bewegt (siehe den Abschnitt "D"), der erste Schaltdruckwert 20 auf den unteren Grenzwert 32 des zweiten vorgegebenen Druckbereichs 31 gesetzt, während der zweite Schaltdruckwert 30 auf den oberen Grenzwert 33 des zweiten vorgegebenen Druckbereichs 31 gesetzt wird. Hierdurch wird erreicht, dass der Luftverdichter 3 verhältnismäßig häufig angetrieben wird, nämlich immer auf den Abschnitten des Druckverlaufes 25 im Druckluftsystem 5 beginnend mit dem ersten Schaltdruckwert 20 bis zu dem zweiten Schaltdruckwert 30, wobei gleichzeitig aufgrund des vorherrschenden Druckes 25 im Druckluftsystem 5 der Luftverdichter 3 gegen einen verhältnismäßig hohen Gegendruck arbeitet, was zu einer hohen Leistungsaufnahme desselben führt.

Wie bereits dargestellt wurde, kann der Gegendruck unmittelbar hinter dem Luftverdichter 3, das heißt auf der Luftabgabeseite 3.1 des Luftverdichters 3, noch dadurch erhöht werden, dass eine Drossel 6 in die Luftleitung geschaltet wird. Durch diese Drosselwirkung wird der Gegendruck, gegen welchen der Luftverdichter 3 arbeitet, nochmals um eine vorbestimmte Differenz gegenüber dem in der Figur 3 dargestellten Druck 25 im Druckluftsystem 5 erhöht.

Gemäß einer besonderen Ausführungsform der Erfindung werden fahrspezifische Daten für die Bewertung des Streckenprofils 12 ausgewertet, wobei diese fahrspezifischen Daten auf vergangenen Fahrten des Kraftfahrzeugs 10 auf derselben oder einer hinsichtlich der Topographie ähnlichen Strecke erfasst und gespeichert worden sind.

## Patentansprüche

1. Verfahren zum Regeln eines Druckluftversorgungssystems eines Kraftfahrzeugs (10), wobei das System einen Antriebsmotor (1) zum Antrieb des Kraftfahrzeugs (10) umfasst, welcher über eine Triebverbindung (2) einen Luftverdichter (3) antreibt oder in eine solche Triebverbindung (2) zum Antreiben des Luftverdichters (3) schaltbar ist;
mit den folgenden Schritten:
1.1 in einem Speisungszustand wird der Luftverdichter (3) derart vom Antriebsmotor (1) angetrieben und ist mit seiner Luftabgabeseite (3.1) mit einem Druckluftsystem (5) des Kraftfahrzeugs (10) verbunden, dass er Druckluft in das Druckluftsystem (5) einspeist;
1.2 in einem Nichtspeisungszustand wird der Luftverdichter (3) nicht angetrieben und/oder ist nicht mit dem Druckluftsystem (5) verbunden; wobei
1.3 die Einstellung des Speisungszustandes oder Nichtspeisungszustandes in Abhängigkeit eines Vergleichs von wenigstens einem Schaltdruckwert (20, 30) mit einem Druck (25) im Druckluftsystem (5) erfolgt,
**gekennzeichnet durch** die folgenden Merkmale:
1.4 die Topographie der Fahrtstrecke (11), auf welcher sich das Kraftfahrzeug (10) bewegt, wird erfasst, wobei diese Topographie das Streckenprofil (12) beinhaltet, welches das Kraftfahrzeug (10) innerhalb einer vorgegebenen unmittelbar bevorstehenden Zeitspanne und/oder Wegstrecke bei einem vorgegebenen Fahrtziel zurücklegen muss;
1.5 wenigstens ein Schaltdruckwert (20, 30) wird in Abhängigkeit der erfassten Topographie bestimmt.

2. Verfahren gemäß Anspruch 1, **dadurch gekennzeichnet, dass**
2.1 ein erster Druckbereich (21) für einen Mindestdruck im Druckluftsystem (5) festgelegt wird, wobei der vorgegebene erste Druckbereich (21) einen unteren Grenzwert (22) und einen oberen Grenzwert (23) aufweist; und
2.2 wenn sich das Kraftfahrzeug (10) eine Steigung hinauf bewegt und eine durchgeführte automatische Bewertung des Streckenprofils (12) eine dauerhaft zu erwartende Bremsung ausschließt, der Schaltdruckwert (20) auf den unteren Grenzwert (22) gesetzt wird; und
2.3 wenn sich das Kraftfahrzeug (10) keine Steigung hinauf bewegt und/oder die durchgeführte automatische Bewertung des Streckenprofils (12) eine dauerhaft zu erwartende Bremsung nicht ausschließt, der Schaltdruckwert (20) auf einen Wert oberhalb des unteren Grenzwertes (22), insbesondere auf den arithmetischen Mittelwert (24) zwischen dem unteren Grenzwert (22) und dem oberen Grenzwert (23) gesetzt wird, wobei
2.4 dann in den Speisungszustand geschaltet wird, wenn der Druck (25) im Druckluftsystem (5) den Schaltdruckwert (20) unterschreitet.

3. Verfahren gemäß Anspruch 2, **dadurch gekennzeichnet, dass** ein zweiter Schaltdruckwert (30) bestimmt wird, welcher mit dem Druck (25) im Druckluftsystem (5) verglichen wird, und wobei, wenn der Druck (25) im Druckluftsystem (5) auf den zweiten Schaltdruckwert (30) angestiegen ist, in den Nichtspeisungszustand geschaltet wird; und
3.1 wenn sich das Kraftfahrzeug (10) eine Steigung hinauf bewegt und eine durchgeführte automatische Bewertung des Streckenprofils (12) eine dauerhaft zu erwartende Bremsung ausschließt, der zweite Schaltdruckwert (30) auf den oberen Grenzwert (23) gesetzt wird; und
3.2 wenn sich das Kraftfahrzeug (10) keine Steigung hinauf bewegt und/oder die durchgeführte automatische Bewertung des Streckenprofils (12) eine dauerhaft zu erwartende Bremsung nicht ausschließt, der zweite Schaltdruckwert (30) in einen vorgegebenen Druckbereich (31) mit einem unteren Grenzwert (32) und einem oberen Grenzwert (33) für einen Maximaldruck im Druckluftsystem (5) oder auf einen vorgegebenen Maximaldruckwert gesetzt wird.

4. Verfahren gemäß einem der Ansprüche 1 bis 3, **dadurch gekennzeichnet, dass**
4.1 ein zweiter Druckbereich (31) für einen Mindestdruck im Druckluftsystem (5) mit einem unteren Grenzwert (32) und einem oberen Grenzwert (33) vorgegeben wird, wobei der obere Grenzwert (33) einem vorgegebenen maximal zulässigen Druck im Druckluftsystem (5) entspricht, und insbesondere der untere Grenzwert (32) oberhalb des in Anspruch 2 genannten oberen Grenzwertes (23) liegt, und
4.2 wenn sich das Kraftfahrzeug (10) eine Steigung hinab bewegt, der Schaltdruckwert (20) auf den unteren Grenzwert (32) gesetzt wird, und
4.3 wenn der Druck (25) im Druckluftsystem (5) auf den Schaltdruckwert (20) abfällt, in den Speisungszustand geschaltet wird; und
4.4 ein zweiter Schaltdruckwert (30) auf den oberen Grenzwert (33) gesetzt wird, und
4.5 wenn der Druck (25) im Druckluftsystem (5) auf den zweiten Schaltdruckwert (30) ansteigt, in den Nichtspeisungszustand geschaltet wird.

5. Verfahren gemäß einem der Ansprüche 1 bis 3, **dadurch gekennzeichnet, dass**, wenn sich das Kraftfahrzeug (10) eine Steigung hinab bewegt, stets der Speisungszustand eingestellt wird, und Druckluft aus dem Druckluftsystem (5) abgelassen wird, wenn der Druck im Druckluftsystem (5) einen vorgegebenen maximal zulässigen Druck überschreitet.

6. Verfahren gemäß einem der Ansprüche 1 bis 5, **dadurch gekennzeichnet, dass**, wenn sich das Kraftfahrzeug (10) eine Steigung hinab bewegt, in eine luftführende Leitung auf der Luftabgabeseite (3.1) eine Drossel (6) derart geschaltet wird, dass der von dem Luftverdichter (3) geförderte Luftstrom gedrosselt wird und somit der Gegendruck, gegen welchen der Luftverdichter (3) fördert, erhöht wird.

7. Verfahren gemäß einem der Ansprüche 1 bis 3, **dadurch gekennzeichnet, dass**, wenn sich das Kraftfahrzeug (10) eine Steigung hinab bewegt, die Luftabgabeseite (3.1) des Luftverdichters (3) mittels eines Absperrventils gesperrt wird.

8. Verfahren gemäß einem der Ansprüche 1 bis 7, **dadurch gekennzeichnet, dass** in der Triebverbindung (2) zwischen dem Antriebsmotor (1) und dem Luftverdichter (3) eine schaltbare hydrodynamische Kupplung (4) angeordnet ist, und der Arbeitsraum der hydrodynamischen Kupplung (4) mit Arbeitsmedium befüllt wird, um in den Speisungszustand zu schalten, und der Arbeitsraum der hydrodynamischen Kupplung (4) vollständig oder bis auf eine vorgegebene Restarbeitsmediummenge entleert wird, um in den Nichtspeisungszustand zu schalten.

9. Verfahren gemäß einem der Ansprüche 2 bis 8, **dadurch gekennzeichnet, dass** für die durchgeführte automatische Bewertung des Streckenprofils (12) fahrspezifische Daten ausgewertet werden, welche während einer früheren Fahrt des Kraftfahrzeugs (10) auf derselben oder einer hinsichtlich der Topographie ähnlichen Strecke erfasst und gespeichert worden sind.

## Claims

1. A method for regulating a compressed air supply system of a motor vehicle (10), wherein the system contains a drive motor (1) for driving the motor vehicle (10), which drives an air compressor (3) via a drive connection (2) or can be switched to such a drive connection (2) for driving the air compressor (3);
with the following steps:
1.1 In a supply state, the air compressor (3) is driven by the drive motor (1) and connected with its air outlet side (3.1) to an compressed air system (5) of the motor vehicle (10) in such a way that it supplies compressed air into the compressed air system (5);
1.2 In a non-supply state, the air compressor (3) is not driven and/or not connected to the compressed air system (5);
wherein
1.3 switching the compressor on or off depends on the comparison of at least one switching pressure value (20,30) with a pressure (25) in the compressed air system (5),
**characterised by** the following features:
1.4 the topography of the driving distance (11), whereon the motor vehicle (10) is circulating, is input, whereas this topography contains the itinerary profile (12), which the motor vehicle (10) must travel within a preset time span and/or distance immediately ahead in the case of a preset destination;
1.5 at least one switching pressure value (20, 30) is established according to the input topography.

2. A method according to claim 1, **characterised in that**
2.1 a first pressure range (21) is defined for a minimal pressure in the compressed air system (5), wherein the preset first pressure range (21) presents a lower limit (22) and an upper limit (23); and
2.2 if the motor vehicle (10) is driving up a slope and an interpretation of the itinerary profile (12) performed automatically rules out any durably expected braking, the switching pressure value (20) is set to the lower limit (22); and
2.3 if the motor vehicle (10) is not driving up a slope and/or the interpretation of the itinerary profile (12) performed automatically does not rule out any durably expected braking, the switching pressure value (20) is set to a value above the lower limit (22), in particular to the arithmetic mean (24) between the lower limit (22) and the upper limit (23), wherein
2.4 the compressor then is switched into the supply state, if the pressure (25) in the compressed air system (5) falls below the switching pressure value (20).

3. A method according to claim 2, **characterised in that** a second switching pressure value (30) is determined, which is compared with the pressure (25) in the compressed air system (5), and whereas, if the pressure (25) in the compressed air system (5) increases to the second switching pressure value (30), the compressor is switched in the non-supply state; and
3.1 if the motor vehicle (10) is driving up a slope and an interpretation of the itinerary profile (12) performed automatically rules out any durably expected braking, the switching pressure value (30) is set to the upper limit (23); and
3.2 if the motor vehicle (10) is not driving up a slope and/or the interpretation of the itinerary profile (12) performed automatically does not rule out any durably expected braking, the second switching pressure value (30) is set in a preset pressure range (31) with a lower limit (32) and an upper limit (33) for a maximum pressure in the compressed air system (5) or to a preset maximum pressure value.

4. A method according to any of the claims 1 to 3, **characterised in that**
4.1 a second pressure range (31) is preset for a minimum pressure in the compressed air system (5) with a lower limit (32) and an upper limit (33), wherein the upper limit (33) corresponds to a preset maximum admissible pressure in the compressed air system (5), and in particular the lower limit (32) lies above the upper limit (23) mentioned in claim 2, and
4.2 if the motor vehicle (10) is driving down a slope, the switching pressure value (20) is set to the lower limit (32), and
4.3 if the pressure (25) in the compressed air system (5) drops to the switching pressure value (20), the compressor is switched in the supply state; and
4.4 a second switching pressure value (30) is set to the upper limit (33), and
4.5 if the pressure (25) in the compressed air system (5) increases to the second switching pressure value (30), the compressor is switched in the non-supply state.

5. A method according to any of the claims 1 to 3, **characterised in that** if the motor vehicle (10) is driving down a slope, the compressor is alwaysswitched in the supply state, and compressed air is purged from the compressed air system (5), if the pressure in the compressed air system (5) exceeds a preset maximum admissible pressure.

6. A method according to any of the claims 1 to 5, **characterised in that** if the motor vehicle (10) is driving down a slope, a throttle (6) is switched in an air conducting circuit on the air outlet side (3.1) in such a way that the air stream fed from the air compressor (3) is throttled and consequently the counter-pressure, which the air compressor (3) tries to overcome, is increased.

7. A method according to any of the claims 1 to 3, **characterised in that** if the motor vehicle (10) is driving down a slope, the air outlet side (3.1) of the air compressor (3) is blocked by a shut-off valve.

8. A method according to any of the claims 1 to 7, **characterised in that** a switchable hydrodynamic clutch (4) is arranged in the drive connection (2) between the drive motor (1) and the air compressor (3) and the work space of the hydrodynamic clutch (4) is filled with working fluid, to switch the compressor in the supply state, and the work space of the hydrodynamic clutch (4) is emptied completely or down to a preset residual amount of working fluid, to switch the compressor in the non-supply state.

9. A method according to any of the claims 2 to 8, **characterised in that** driving-specific data are interpreted for the automatic interpretation of the itinerary profile (12) which during a previous driving sequence of the motor vehicle (10) on the same distance or a similar distance as regards the topography were input and stored in memory.

## Revendications

1. Procédé de régulation d'un circuit d'alimentation en air comprimé d'un véhicule automobile (10), dans lequel le circuit comprend un moteur d'entraînement (1) assurant l'entraînement du véhicule automobile (10), qui entraîne un compresseur d'air (3) par le biais d'une liaison motrice (2) ou peut être sollicitée pour constituer une telle liaison motrice (2) pour entraîner le compresseur d'air (3);
comprenant les phases suivantes :
1.1 sous tension, le compresseur d'air (3) est entraîné par le moteur d'entraînement (1) et connecté en sa partie décharge d'air (3.1) à un circuit d'air comprimé (5) du véhicule automobile (10) de telle sorte qu'il injecte de l'air comprimé dans le circuit d'air comprimé (5);
1.2 hors tension, le compresseur d'air (3) n'est pas entraîné et/ou n'est pas connecté au circuit d'air comprimé (5);
dans lequel
1.3 on met le compressor sous tension ou hors tension en comparant au moins une valeur de pression de commutation (20, 30) avec une pression (25) dans le circuit d'air comprimé (5), présentant les caractéristiques suivantes:
1.4 la topographie du parcours (11) sur lequel se déplace le véhicule automobile (10),est saisie, tandis que cette topographie contient le profil du parcours (12), que le véhicule (10) doit parcourir dans un laps de temps et/ou une distance prédéterminés immédiatement imminent avec une destination prédéterminée;
1.5 au moins une valeur de pression de commutation (20, 30) est définie en fonction de la topographie saisie.

2. Procédé conforme à la revendication 1 **caractérisé en ce qu'**une
2.1 première plage de pression (21) est définie pour une pression minimale dans le circuit d'air comprimé (5), tandis que la première plage de pression (21) prédéterminée présente une limite inférieure (22) et une limite supérieure (23); et
2.2 si le véhicule (10) monte une pente et si une interprétation effectuée automatiquement du profil du parcours (12) exclut tout freinage durablement prévisible, la valeur de pression de commutation (20) est réglée sur la limite inférieure (22); et
2.3 si le véhicule (10) ne monte pas de pente et/ou si l'interprétation effectuée automatiquement du profil du parcours (12) n'exclut pas tout freinage durablement prévisible, la valeur de pression de commutation (20) adopte une valeur au-dessus de la limite inférieure (22), en particulier la moyenne arithmétique (24) entre la limite inférieure (22) et la limite supérieure (23), tandis que
2.4 le compresseur est alors mis sous tension si la pression (25) dans le circuit d'air comprimé (5) tombe au-dessous de la valeur de pression de commutation (20).

3. Procédé conforme à la revendication 2 **caractérisé en ce que** l'on définit une seconde valeur de pression de commutation (30), que l'on compare à la pression (25) dans le circuit d'air comprimé (5), et dans lequel si l'on augmente la pression (25) dans le circuit d'air comprimé (5) pour atteindre la seconde valeur de pression de commutation (30), et le compresseur est mis hors tension;
3.1 si le véhicule (10) monte une pente et si une interprétation effectuée automatiquement du profil du parcours (12) exclut tout freinage durablement prévisible, la seconde valeur de pression de commutation (30) adopte la limite supérieure (23); et
3.2 si le véhicule (10) ne monte pas de pente et/ou si l'interprétation effectuée automatiquement du profil du parcours (12) n'exclut pas tout freinage durablement prévisible, la seconde valeur de pression de commutation (30) devient comprise dans une plage de pression prédéterminée (31) avec une limite inférieure (32) et une limite supérieure (33) pour une pression maximale dans le circuit d'air comprimé (5) ou bien adopte une valeur de pression maximale prédéterminée.

4. Procédé selon l'une des revendications 1 à 3, **caractérisé en ce**
4.1 qu'une seconde plage de pression (31) est prédéterminée pour une pression minimale dans le circuit d'air comprimé (5) avec une limite inférieure (32) et une limite supérieure (33), dans lequel la limite supérieure (33) correspond à une pression maximale admissible prédéterminée dans le circuit d'air comprimé (5), et en particulier la limite inférieure (32) est au-dessus de la limite supérieure (23) mentionnée à la revendication 2, et
4.2 si le véhicule (10) descend une pente, la valeur de pression de commutation (20) adopte la limite inférieure (32), et
4.3 si la pression (25) dans le circuit d'air comprimé (5) chute à la valeur de pression de commutation (20), le compresseur est mis sous tension; et
4.4 une seconde valeur de pression de commutation (30) adopte la limite supérieure (33), et
4.5 si la pression (25) dans le circuit d'air comprimé (5) progresse jusqu'à la seconde valeur de pression de commutation (30), le compresseur est mis hors tension.

5. Procédé selon l'une des revendications 1 à 3, **caractérisé en ce que** si le véhicule (10) descend une pente, le compresseur est toujours sous tension et l'on purge l'air comprimé du circuit d'air comprimé (5), si la pression dans le circuit d'air comprimé (5) dépasse une pression maximale admissible prédéterminée.

6. Procédé selon l'une des revendications 1 à 5, **caractérisé en ce que** si le véhicule (10) descend une pente, un étrangleur (6) est sollicité dans un circuit conducteur d'air dans la partie décharge d'air (3.1) de telle sorte que le courant d'air acheminé par le compresseur d'air (3) est étranglé et ainsi la contre-pression, à laquelle s'oppose le compresseur d'air (3), augmente.

7. Procédé selon l'une des revendications 1 à 3, **caractérisé en ce que** si le véhicule (10) descend une pente, la partie décharge d'air (3.1) du compresseur d'air (3) est bloquée à l'aide d'une vanne d'arrêt.

8. Procédé selon l'une des revendications 1 à 7, **caractérisé en ce qu'**un embrayage hydrodynamique commutable (4) est disposé dans la liaison motrice (2) entre le moteur d'entraînement (1) et le compresseur d'air (3), et l'espace de travail de l'embrayage hydrodynamique (4) se remplit de fluide de travail, pour se mettre sous tension et l'espace de travail de l'embrayage hydrodynamique (4) se vide complètement ou pour redescendre à une quantité résiduelle de fluide de travail, pour se mettre hors tension.

9. Procédé selon l'une des revendications 2 à 8, **caractérisé en ce que** des données spécifiques à la conduite sont interprétées dans le cadre de l'interprétation effectuée automatiquement du profil du parcours (12), ont été saisies et mémorisées pendant une conduite précédente du véhicule (10) sur le même trajet ou un trajet similaire en ce qui concerne la topographie.
